**Europäisches Patentamt**

**European Patent Office**

**Office européen des brevets**

(11) Veröffentlichungsnummer: **0 065 752**
**B1**

(12) **EUROPÄISCHE PATENTSCHRIFT**

(45) Veröffentlichungstag der Patentschrift:
07.03.84

(51) Int. Cl.³: **G 06 M 9/00,** G 06 M 1/10 //
B65G57/00

(21) Anmeldenummer: **82104384.1**

(22) Anmeldetag: **19.05.82**

(54) Verfahren und Vorrichtung zum Zählen der in aufeinander gestapelten Flaschenkästenschichten enthaltenen oder fehlenden Flaschen.

(30) Priorität: **22.05.81 IT 343981**

(43) Veröffentlichungstag der Anmeldung:
**01.12.82 Patentblatt 82/48**

(45) Bekanntmachung des Hinweises auf die Patenterteilung:
**07.03.84 Patentblatt 84/10**

(84) Benannte Vertragsstaaten:
**AT BE CH DE FR GB LI LU NL SE**

(56) Entgegenhaltungen:
**DE - A - 1 499 465**
**DE - A - 2 654 777**
**FR - A - 2 126 350**
**US - A - 3 070 297**

(73) Patentinhaber: **G.A.R.BO. S.n.c. di Guerzoni Alessandro & C., Via Persicetana 14, I-40012 Calderara di Reno (Bologna) (IT)**

(72) Erfinder: **Guerzoni, Alessandro, Via Casciarolo 8, I-40127 Bologna (IT)**
Erfinder: **Guerzoni, Renato, Via Casciarolo 8, I-40127 Bologna (IT)**

(74) Vertreter: **Porsia, Bruno et al, c/o Succ. Ing. Fischetti & Weber Via Caffaro 3, I-16124 Genova (IT)**

Verfahren und Vorrichtung zum Zählen der in aufeinander gestapelten Flaschenkästenschichten enthaltenen oder fehlenden Flaschen

Die Erfindung betrifft ein Verfahren und eine Vorrichtung zum Zählen der in aufeinander gestapelten Flaschenkästenschichten enthaltenen oder fehlenden Flaschen.

Bei der Rückgabe von leeren Flaschen z.B. an einen Abfüllbetrieb, werden die leeren Flaschen in aufeinander gestapelten Flaschenkästenschichten abgeliefert. Dabei sind die meisten Flaschenkästen nur teilweise gefüllt. Zur Bestimmung der Anzahl der abgelieferten leeren Flaschen ist es bekannt, einige Flaschenkästenstapel abzubauen, die in den einzelnen Flaschenkästen enthaltenen bzw. fehlenden Flaschen zu zählen und dann die Flaschenkästenstapel wieder aufzubauen. Auf Grund solcher Stichproben wurde die Gesamtzahl der in einer Lieferung enthaltenen bzw. fehlenden, leeren Flaschen geschätzt. Mit diesem bekannten Verfahren werden sehr ungenaue Ergebnisse erzielt. Ausserdem ist das Abbauen und das erneute Aufbauen der stichprobenartig überprüften Flaschenkästenstapel mühsam, zeitraubend und aufwendig.

Aufgabe der Erfindung ist es, diese Nachteile der bekannten Verfahren zu beheben und ein Verfahren der eingangs beschriebenen Art zu entwickeln, mit dem die in den aufeinanderliegenden Flaschenkästenschichten des Stapels enthaltenen bzw. fehlenden Flaschen genau und mit geringem Zeit- und Arbeitsaufwand gezählt werden können, wobei mit diesem Verfahren zusätzlich auch die Voraussetzung zur Ausbildung einer automatischen Vorrichtung geschaffen werden soll.

Diese Aufgabe wird erfindungsgemäss dadurch gelöst, dass die übereinanderliegenden Flaschenkästenschichten mit Ausnahme der untersten Flaschenkästenschicht voneinander angehoben werden, dass in die Lücken zwischen die Flaschenkästenschichten und über die oberste Flaschenkästenschicht gleichzeitig Flaschenzählwerke eingefahren werden, die auf die vorhandenen bzw. fehlenden Flaschen in der jeweils darunterliegenden Flaschenkästenschicht ansprechen und entsprechende Zählsignale an einen elektronischen Rechner senden, der die ermittelte Flaschenzahl für jede Flaschenkästenschicht und/oder für jeden Stapel der Flaschenkästenschichten und/oder für mehrere aufeinanderfolgende Flaschenkästenstapel anzeigt und/oder aufzeichnet und/oder für spätere Summenbildung speichert, und dann die Flaschenzählwerke ausgefahren und die angehobenen Flaschenkästenschichten abgesenkt und wieder aufeinander abgesetzt werden.

Die einzelnen, aufeinanderliegenden Flaschenkästenschichten des Stapels können in an sich bekannter Weise aus je einem Flaschenkasten oder aus mehreren, nebeneinanderliegenden Flaschenkästen bestehen. Insbesondere in diesem letzteren Fall ist es in Weiterentwicklung des erfindungsgemässen Verfahrens vorteilhaft, dass die je eine Flaschenkästenschicht bildenden Flaschenkästen zum vorübergehenden Anheben der Flaschenkästenschicht mit seitlichem Druck gegeneinander gedrückt werden. Die Erfindung beruht dabei auf der Erkenntnis, dass die schnell und einfach herzustellende seitliche Druckverspannung der nebeneinanderliegenden, eine Flaschenkästenschicht des Stapels zusammensetzenden Flaschenkästen ausreicht, um diese Flaschenkästen so fest gegeneinander anzupressen, dass sie schichtweise als ein einheitliches Ganzes angehoben und abgesenkt werden können.

Die in jeder Flaschenkästenschicht des Stapels enthaltenen bzw. fehlenden Flaschen können für die ganze Flaschenkästenschicht gleichzeitig oder reihenweise gezählt werden. Die erstgenannte Ausführungsform des Verfahrens hat den Vorteil einer grösseren Zeiteinsparung. Mit der letztgenannten Ausführungsform des Verfahrens kann dagegen der bauliche Aufwand zur Durchführung des Verfahrens bedeutend herabgesetzt werden.

Die erfindungsgemässe Vorrichtung zur Durchführung des Verfahrens ist dadurch gekennzeichnet, dass in einer Flaschenzählstation jeder Flaschenkästenschicht des Stapels mit Ausnahme der untersten Flaschenkästenschicht eine auf und ab bewegbare Greifvorrichtung zum seitlichen Verspannen und vorübergehenden Anheben der betreffenden Flaschenkästenschicht zugeordnet ist und mehrere, übereinanderliegende, in waagerechter Richtung vom und zum Flaschenkästenstapel verschiebbar gelagerte, mit einem elektronischen Rechner zur Steuerung der Vorrichtung und zur Auswertung der Zählergebnisse verbundene Flaschenzählwerke aus einer seitlich neben dem Flaschenkästenstapel liegenden, ausgefahrenen Ruhestellung vorübergehend über die Flaschenkästenschichten einfahrbar sind.

Weitere Merkmale und Vorteile der Erfindung ergeben sich aus den Unteransprüchen und aus nachstehender Beschreibung eines in der Zeichnung dargestellten Ausführungsbeispiels der erfindungsgemässen Vorrichtung.

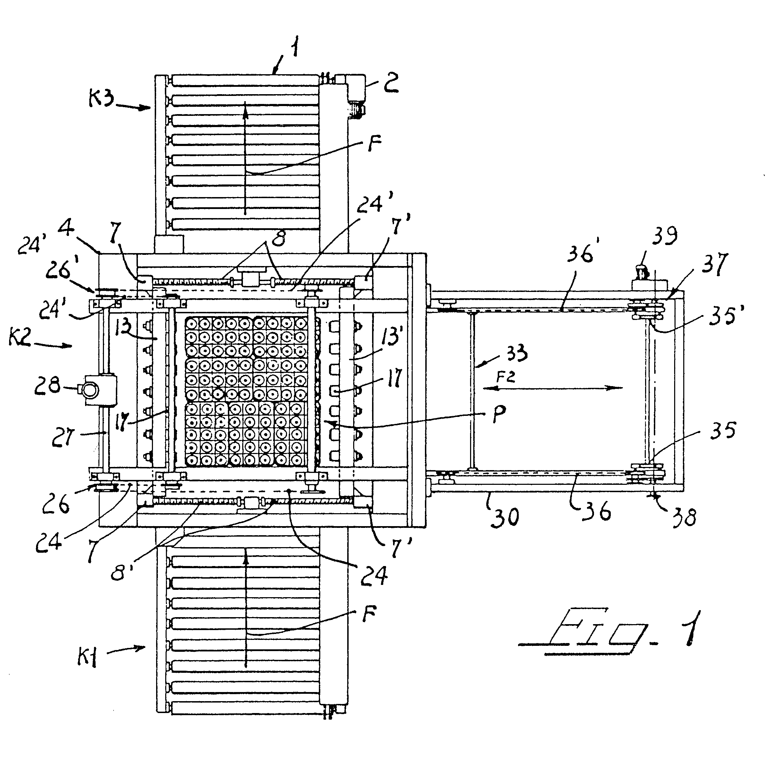

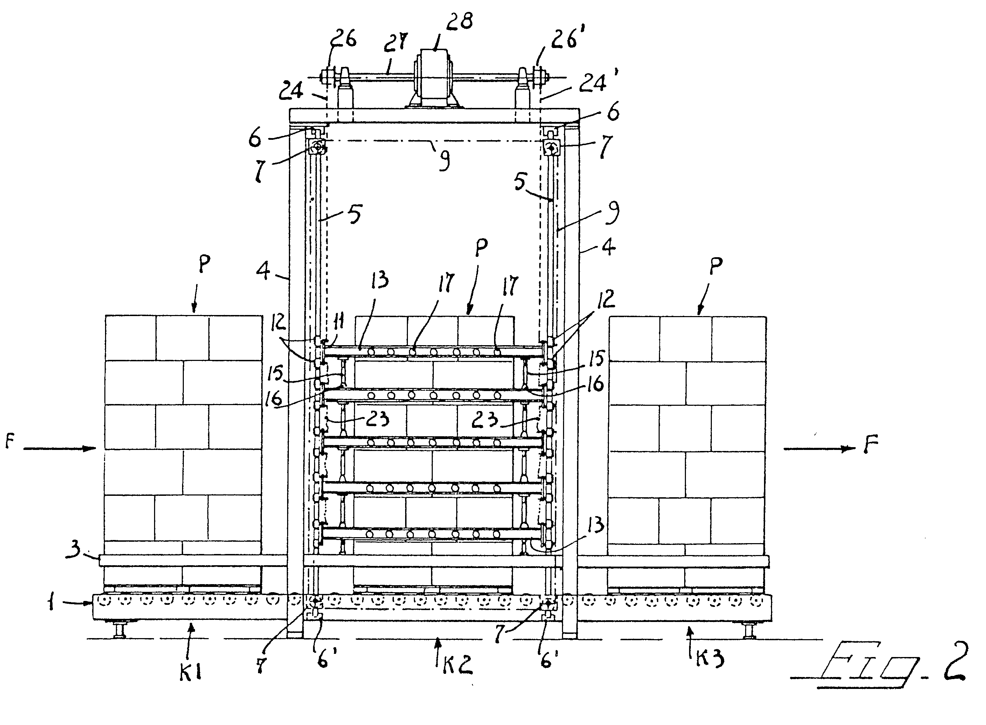

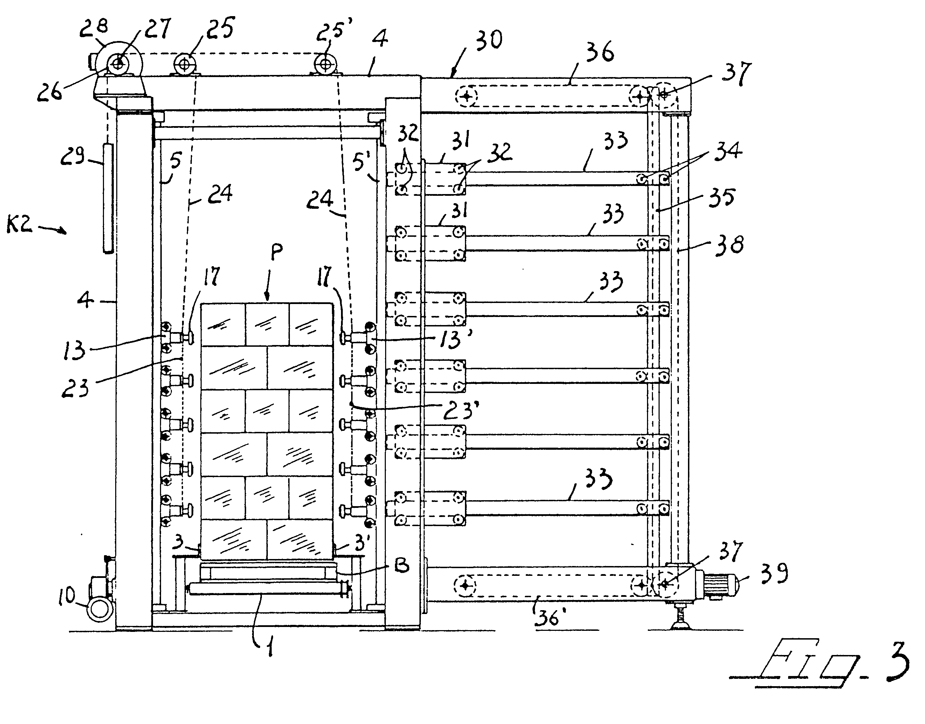

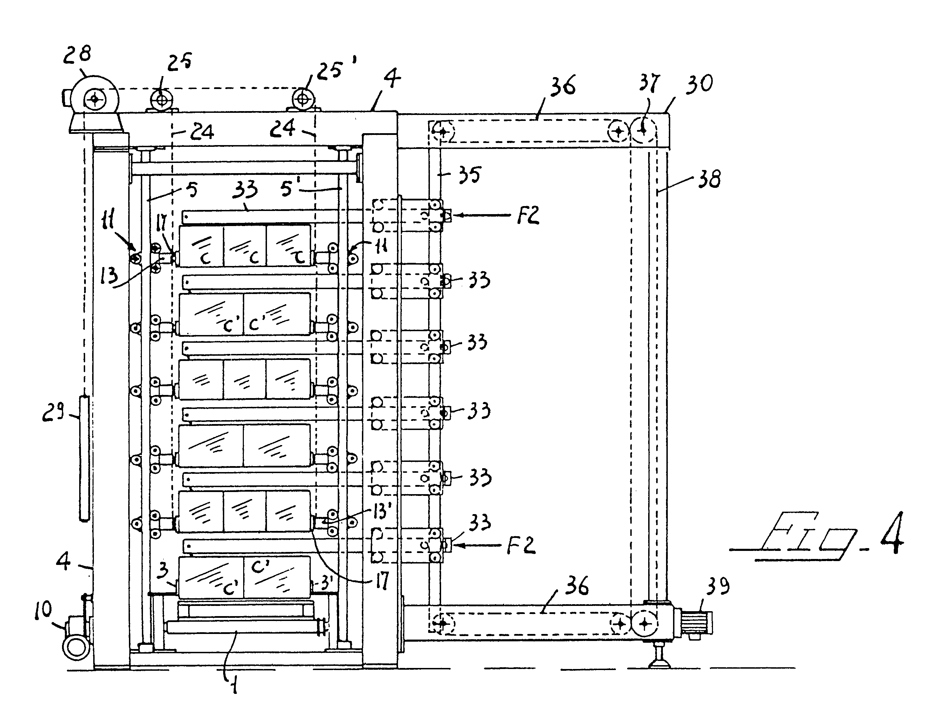

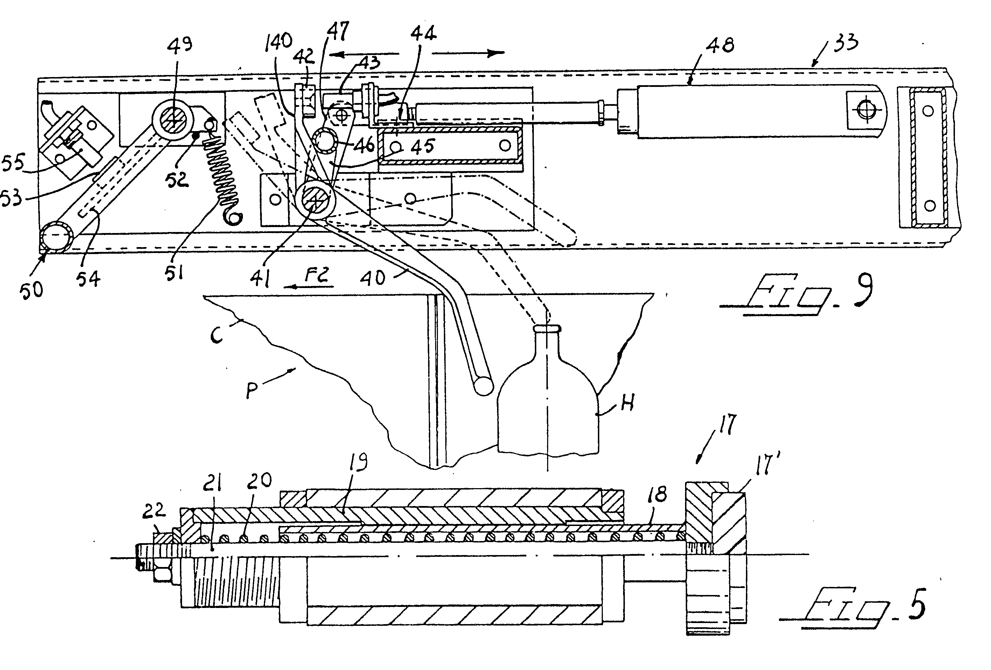

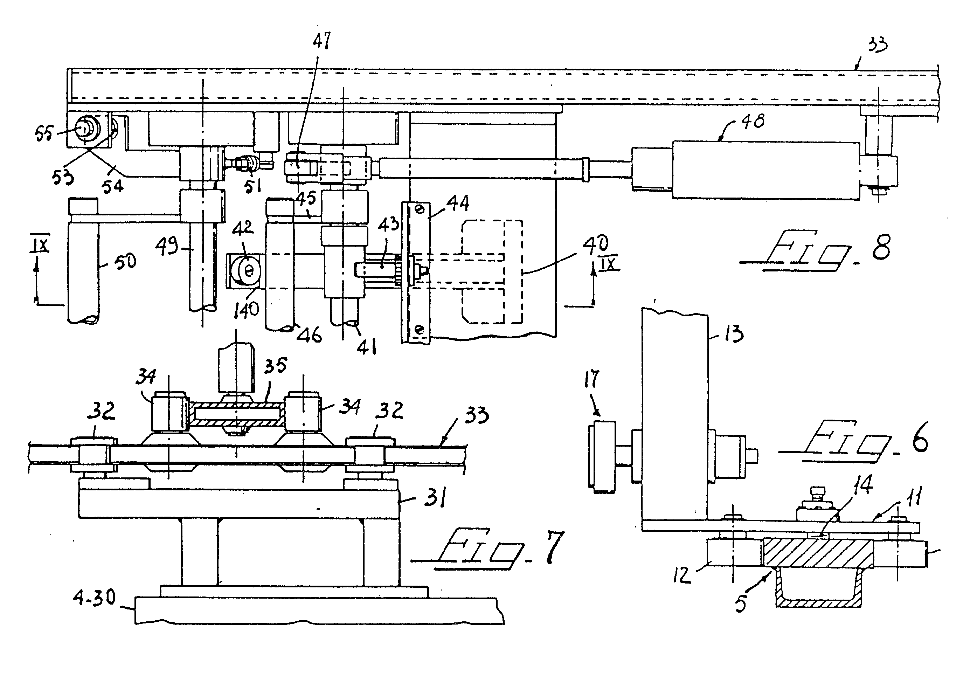

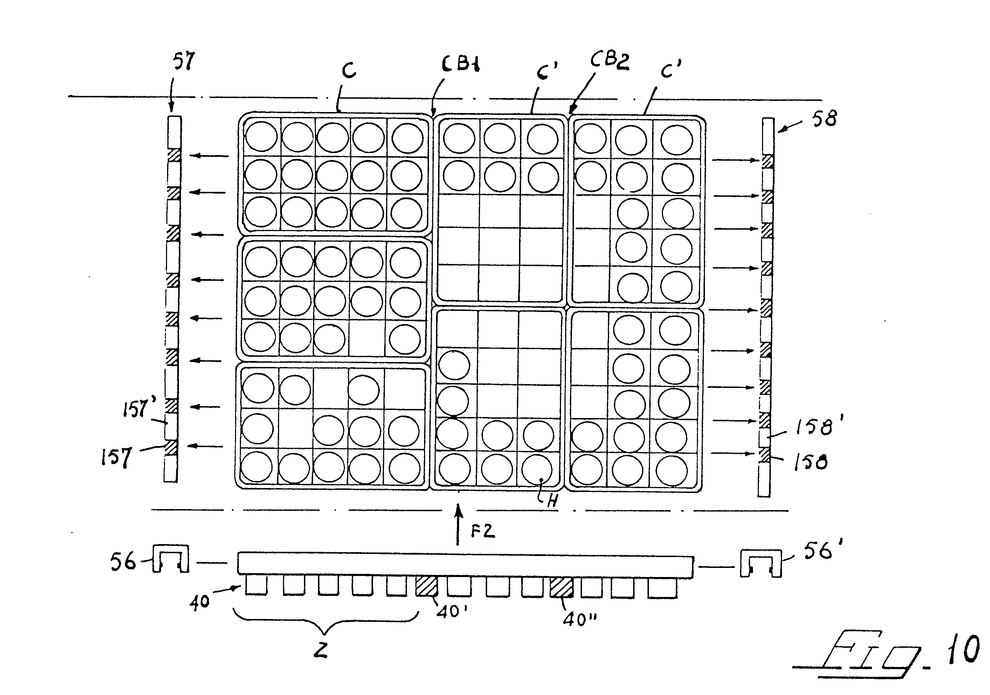

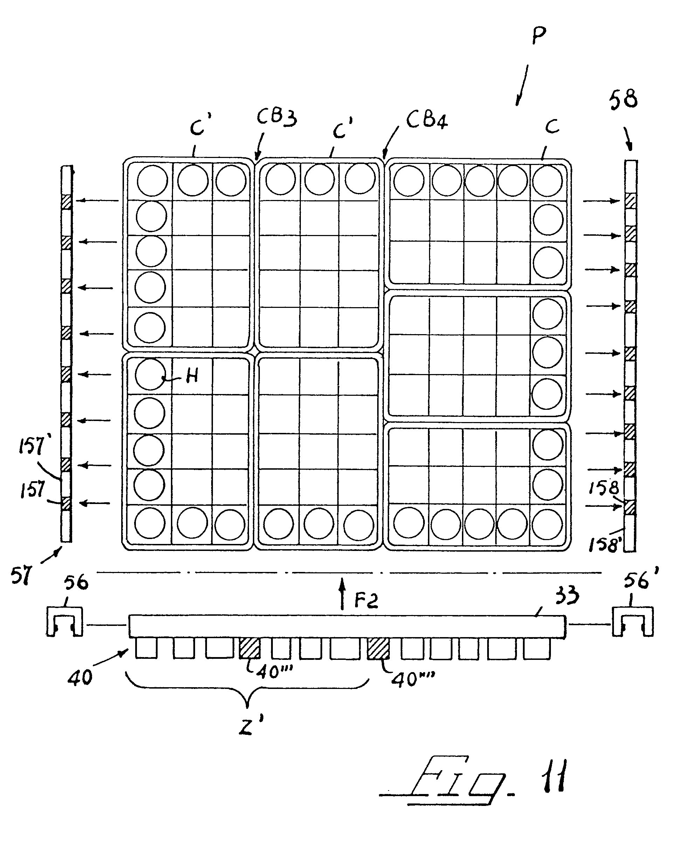

Fig. 1 zeigt in schematischer Draufsicht eine erfindungsgemässe Vorrichtung zum Zählen der in übereinander gestapelten Flaschenkästenschichten enthaltenen oder fehlenden Flaschen; Fig. 2 zeigt die Vorrichtung in seitlichem Aufriss; Fig. 3 ist eine hinterseitige Stirnansicht der Vorrichtung mit Greifvorrichtungen und Flaschenzählwerken in Ruhestellung; Fig. 4 zeigt die Vorrichtung in der selben Stirnansicht nach Fig. 3 jedoch bei angehobenen Flaschenkästenschichten und darüber eingefahrenen Flaschenzählwerken; Fig. 5 zeigt zur Hälfte im Aufriss und zur Hälfte im Längsschnitt einen Spannpuffer einer Greifvorrichtung; Fig. 6 und 7 zeigen in Draufsicht und teilweise in waagrechtem Schnitt einige Einzelheiten der Führungen für die Greifvorrichtungen und für die Flaschenzählwerke; Fig. 8 ist eine teilweise Draufsicht auf ein Flaschenzählwerk; Fig. 9 ist ein vertikaler Schnitt durch das Flaschenzählwerk nach der Schnittlinie IX–IX der Fig. 8; Fig. 10 und 11 zeigt in Draufsicht zwei aufeinanderliegende Flaschenkästenschichten mit zugeordneten, rein schematisch dargestellten Teilen der betreffenden Flaschenzählwerke.

Die dargestellte Vorrichtung zum Zählen der in gestapelten Flaschenkästenschichten enthaltenen oder fehlenden Flaschen weist einen waagrechten Rollgang 1 auf, der in der Förderrichtung F durch einen Getriebemotor 2 angetrieben wird. Die mit insbesondere leeren Flaschen H unregelmässig bzw. teilweise gefüllten Flaschenkästen C, C' sind zu quaderförmigen Stapeln P aufeinandergelegt, wobei jede Schicht eines Stapels P aus mehreren, nebeneinanderliegenden Flaschenkästen C, C' zusammengesetzt sein kann und der Flaschenkästenstapel P einen quadrat- oder rechteckförmigen Grundriss aufweisen kann. Die Flaschenkästenstapel P werden z.B. mit Hilfe eines Gabelstaplers od. dgl. einen nach dem anderen auf das Einlaufende KI des Rollgangs 1 gelegt, wobei die längeren Seiten des rechteckförmigen Stapelgrundrisses vorzugsweise in der Förderrichtung F des Rollgangs 1 gerichtet sind.

Jeder Stapel P wird auf dem Rollgang 1 zwischen seitlichen längsgerichteten Führungsleisten 3, 3' in eine Flaschenzählstation K2 gebracht, in der ein rechtkantförmiges, sich portalartig über den Rollgang 1 erstreckendes, ortsfestes Maschinengestell 4 vorgesehen ist. Auf jeder Längsseite des Rollgangs 1 sind neben diesem zwei in der Förderrichtung F voneinander abstehende, vertikale Führungsstangen 5 bzw. 5' angeordnet. Je zwei gegenüberliegende Führungsstangen 5, 5' sind mit ihren Enden in einer oberen, waagrechten Führungsschiene 6 und in einer dazu parallelen, unteren, waagrechten Führungsschiene 6' verschiebbar gelagert. Die Führungsschienen 6, 6' erstrecken sich quer zum Rollgang 1. Die beiden oberen, quergerichteten Führungsschienen 6 sind im oberen Teil des Maschinengestells 4 befestigt. Die beiden unteren, quergerichteten Führungsschienen 6' sind unterhalb des Rollgangs 1 durchgeführt.

Je zwei gegenüberliegende, einem quergerichteten Führungsschienenpaar 6, 6' zugeordnete, vertikale Führungsstangen 5, 5' sind sowohl an ihrem unteren als auch an ihrem oberen Ende durch je eine quergerichtete, waagrechte, zur Hälfte rechtsgängige und zur Hälfte linksgängige Gewindespindel 8 bzw. 8' untereinander getrieblich verbunden. Jede Gewindespindel 8 bzw. 8' greift dabei durch eine entsprechende, am betreffenden Ende der Führungsstangen 5, 5' befestigte Schraubenmutter 7 bzw. 7' durch. Alle Gewindespindel 8, 8' sind im Maschinengestell 4 drehbar gelagert und z.B. mit Hilfe von Treibketten 9 untereinander und mit einem gemeinsamen, umschaltbaren Getriebemotor 10 getrieblich verbunden. Mit Hilfe dieses Motors 10 können die beiden, auf entgegengesetzten Seiten des Rollgangs 1 angeordneten, vertikalen Führungsstangenpaaren 5–5 und 5'–5' synchron in den zugeordneten, quergerichteten Führungsschienenpaaren 6–6' von und zu dem auf dem Rollgang 1 in der Flaschenzählstation K2 liegenden und festgehaltenen Flaschenkästenstapel P verschoben werden.

Auf den beiden vertikalen Führungsstangen 5, 5 bzw. 5'–5' auf jeder Längsseite des Rollgangs 1 sind mehrere, übereinander angeordnete, waagerechte, zueinander und zum Rollgang 1 bzw. zur Förderrichtung F parallele Greifbalken 13, 13' auf und ab verschiebbar gelagert. Jeder Greifbalken weist an seinen Enden je einen Wagen 11 mit Laufrollen 12 auf, mit denen er auf den betreffenden vertikalen Führungsstangen 5 bzw. 5' geführt ist. Die Wagen 11 der Greifbalken 13, 13' sind mit einstellbaren Gleitschuhen 14 versehen, die mit den gegeneinander zugekehrten Innenseiten der beiden, auf der selben Längsseite des Rollgangs 1 angeordneten vertikalen Führungsstangen 5, 5 bzw. 5', 5' zusammenwirken und dadurch Verschiebungen der Greifbalken 13, 13' in ihrer Längsrichtung verhindern, wie insbesondere in Fig. 6 dargestellt ist.

Jeder Greifbalken 13, 13' trägt im Bereich seiner beiden Enden je einen nach unten gerichteten Distanzbolzen 15, wie insbesondere aus Fig. 2 ersichtlich ist. In der in Fig. 2 und 3 dargestellten abgesenkten Ruhestellung der Greifbalken 13, 13' werden die beiden untersten Greifbalken 13 und 13' von ortsfesten Stützanschlägen des Maschinengestells in einer Stellung gehalten, in der sie etwas oberhalb der oberen Abschlussebene der untersten Flaschenkästenschicht des Stapels P, d.h. etwa in der Höhe des unteren Teiles der darüberliegenden zweituntersten Flaschenkästenschicht des Stapels P liegen. Die darüberliegenden Greifbalken 13 bzw. 13' auf der selben Längsseite des Rollgangs 1 stützen sich in ihrer Ruhestellung mit ihren Distanzbolzen 15 aufeinander und auf den jeweils untersten Greifbalken ab, wobei sie etwa in der Höhe des unteren Teiles je einer Flaschenkästenschicht des Stapels P liegen. Die vertikalen Distanzbolzen 15 wirken dabei mit zugeordneten, auf der Oberseite des jeweils darunterliegenden Greifbalkens 13, 13' vorgesehenen, elastischen Auflagerkissen 16 zusammen.

Auf der inneren, d.h. dem Rollgang 1 und dem Flaschenkästenstapel P zugekehrten Seite jedes Greifbalkens 13, 13' sind mehrere, waagrechte d.h. senkrecht zu den Seitenwänden des Flaschenkästenstapels gerichtete Spannpuffer 17 im Abstand voneinander angeordnet. Jeder Spannpuffer 17 besteht aus einem Gummikissen 17', das am vorderen Ende eines rohrförmigen Pufferstössels 18 befestigt ist, wie insbesondere aus Fig. 5 hervorgeht. Der Pufferstössel 18 ist längsverschiebbar in einer am Greifbalken 13 bzw. 13' befestigten Pufferhülse 19 gelagert und durch eine Druckfeder 20 nach vorn in Richtung auf den Flaschenkästenstapel P gedrückt. In seiner am weitesten nach vorn vorspringenden, in Fig. 5 dargestellten Ruhestellung ist das Gummikissen 17' des Pufferstössels 18 von einer in diesem angeordneten Zugstange 21 festgehalten, die mit ihrem vorderen Ende an dem das Gummikissen 17' tragenden, am Pufferstössel befestigten Pufferteller befestigt und mit ihrem hinteren
Ende verschiebbar durch den betreffenden hinteren Kopfabschluss der Pufferhülse 19 durchgeführt ist. An ihrem hinteren Ende trägt die Zugstange 21 eine Schraubenmutter 22, die als Hubbegrenzungsanschlag mit dem hinteren Kopfabschluss der Pufferhülse 19 zusammenwirkt. Die
Spannpuffer 17 zweier einander gegenüberliegender Greifträger 13 und 13' sind in der selben
waagerechten Ebene angeordnet.

Die auf jeder Längsseite des Rollgangs 1 bzw.
des Flaschenkästenstapels P übereinander angeordneten Greifbalken 13 bzw. 13' sind untereinander an ihren beiden Enden mit Hilfe von flexiblen Ketten- oder Seilstücken 23, 23' verbunden, die alle die selbe, grösser als die Höhe der
Flaschenkästen C, C' gewählte Länge aufweisen.
An den Enden des obersten Greifbalkens 13 bzw.
13' auf jeder Längsseite des Flaschenkästenstapels P sind zwei Ketten 24, 24' befestigt, die
zuerst über frei drehbar gelagerte Umlenkritzel
25, 25' und anschliessend über zugeordnete, auf
einer gemeinsamen Welle 27 befestigte Antriebsritzel 26, 26' geführt sind. Die freien, nach unten
hängenden Enden der Ketten 24, 24' sind mit
Spanngewichten 29 versehen. Die Welle 27 mit
den Antriebsritzeln 26, 26' ist von einem umschaltbaren Getriebemotor 28 abwechselnd in
beiden Drehrichtungen antreibbar. Die Umlenkritzel 25, 25', die Antriebsritzel 26, 26' und der Getriebemotor 28 mit der Welle 27 sind oben auf
dem Maschinengestell 4 gelagert.

Nachdem ein nicht dargestellter Fühler das
Vorhandensein des von den Anschlägen 3 auf
dem Rollgang 1 angehaltenen Flaschenkästenstapels P in der Zählstation K2 festgestellt hat,
wird der Getriebemotor 10 automatisch in Gang
gesetzt. Dadurch werden die Führungsstangenpaare 5-5 und 5'-5' zusammen mit den entsprechenden Greifbalken 13, 13' gegeneinander in
Richtung auf den dazwischen liegenden Flaschenkästenstapel P bewegt, bis die einander gegenüberliegenden Greifbalken 13, 13' mit ihren
federnd begrenzt nachgebenden Spannpuffern
17 die zugeordneten Flaschenkästenschichten
seitlich ergreifen und fest verspannen. Ausgeschlossen bleibt nur die unterste Flaschenkästenschicht des Stapels P, da sich in ihrem Bereich
kein Greifbalkenpaar 13, 13' befindet. Ein nicht
dargestellter, auf das Schliesshubende der Führungsstangenpaare 5-5' bzw. der Greifbalkenpaare 13-13' ansprechender Fühler setzt anschliessend den Getriebemotor 28 in Gang, der
über die Ketten 24 die Greifbalkenpaare 13-13'
zusammen mit den davon ergriffenen Flaschenkästenschichten des Stapels P z.B. bis zum Straffen bzw. Spannen der Verbindungsketten 23, 23'
anhebt und dabei die einzelnen, übereinanderliegenden Flaschenkästenschichten in vertikaler
Richtung voneinander und von der untersten,
zwischen den Führungsleisten 3, 3' auf dem Rollgang 1 festgehaltenen Flaschenkästenschicht distanziert, wie insbesondere in Fig. 4 dargestellt ist. Nach dem Anheben und dem gegenseitigen
Distanzieren der Flaschenkästenschichten des
Stapels S wird der Getriebemotor 28 ausgeschaltet und in die zwischen den Flaschenkästenschichten gebildeten Lücken, sowie über die
oberste Flaschenkästenschicht des Stapels P
werden seitlich in etwa waagrechter Richtung
Flaschenzählwerke eingeführt, die automatisch
die Anzahl der in der zugeordneten, jeweils darunterliegenden Flaschenkästenschicht befindlichen bzw. fehlenden Flaschen bestimmen und
dann wieder seitlich herausgezogen werden.
Dann wird der Getriebemotor 28 um- und wieder
angeschaltet und treibt die Antriebsritzel 26 der
Ketten 24 in entgegengesetztem Drehsinn an, so
dass die Greifbalkenpaare 13-13' wieder in ihre in
Fig. 2 und 3 dargestellte Ausgangs- bzw. Ruhestellung abgesenkt werden und die zugeordneten
Flaschenkästenschichten wieder aufeinander absetzen. Anschliessend wird der Getriebemotor 10
um- und wieder eingeschaltet, so dass er die
Führungsstangenpaare 5-5 und 5'-5' zusammen
mit den betreffenden Greifbalken 13, 13' auseinander vom dazwischen liegenden Flaschenkästenstapel P weg bewegt und in ihre Ausgangs-
bzw. Ruhestellung nach Fig. 1 bis 3 zurückführt.
Die federnd eingedrückten Spannpuffer 17 werden dabei entspannt und geben den Flaschenkästenstapel P frei. Der bisher ausgeschaltete Rollgang 1 wird wieder eingeschaltet und transportiert den Flaschenkästenstapel P aus der Flaschenzählstation K2 in eine Abnahmestation am
Auslaufende K3 des Rollgangs 1, während der
nächstfolgende, zu überprüfende Flaschenkästenstapel vom Einlaufende K1 des Rollgangs 1 in
die Flaschenzählstation K2 einläuft.

Zur Zählung der vorhandenen bzw. fehlenden
Flaschen in den einzelnen, voneinander angehobenen Flaschenkästenschichten des Stapels P,
ist seitlich neben dem Maschinengestell 4 ein
weiteres, ortsfestes Gestell 30 vorgesehen. An
den beiden äusseren Ständern des Maschinengestells 4 sind in Abständen übereinander vertikale Platten 31 befestigt. Auf den gegeneinander
zugekehrten, inneren Seiten je zweier, in der selben Höhe liegender Platten 31 sind obere und untere Führungsrollen 32 drehbar gelagert, zwischen denen ein waagrechter Zählwerkrahmen
33 verschiebbar geführt ist. Die hinteren, d.h.
dem Maschinengestell 4 abgekehrten Enden der
Zählwerkrahmen 33 weisen auf den Innenseiten
der seitlichen Rahmenholmen je zwei nebeneinander im Abstand angeordnete Führungsrollen
34 auf, zwischen denen je eine vertikale Verbindungsstange 35 bzw. 35' durchgeführt ist, wie
insbesondere auch aus Fig. 7 hervorgeht. Dadurch werden die einzelnen, übereinanderliegenden Zählwerkrahmen 33 untereinander getrieblich verbunden. Die beiden vertikalen Verbindungsstangen 35 und 35' sind mit ihren oberen
und unteren Enden an je einem waagerechten,
quer zum Rollgang 1 gerichteten, umlaufenden,
im Gestell 30 gelagertern Kettentrieb 36 od.dgl.
befestigt. Die vier zueinander parallelen Kettentriebe 36, 36' sind untereinander und mit einem umschaltbaren Getriebemotor 39 über ein beliebiges, nicht näher dargestelltes Getriebesystem 37, z.B. auch über vertikale Kettentriebe 38 od. dgl. gekuppelt. Mit Hilfe des Getriebemotors 39, des nachgeschalteten Getriebesystems 37, 38 und der Kettentrieben 36, 36' können die beiden vertikalen Verbindungsstangen 35, 35' zusammen mit den übereinanderliegenden Zählwerkrahmen 33 vom und zum Flaschenkästenstapel P synchron verschoben werden. Die einzelnen übereinanderliegenden Zählwerkrahmen 33 sind dabei in solchen Höhenlagen bzw. in solchen Abständen voneinander angeordnet und weisen auch eine solche Stärke auf, dass sie bei angehobenen und voneinander distanzierten Flaschenkästenschichten des Stapels P zwischen die einzelnen Flaschenkästenschichten und über die oberste Flaschenkästenschicht ein- und ausgefahren d.h. von der seitlich nach aussen ausgefahrenen Ruhestellung nach Fig. 3 in die in Fig. 4 dargestellte, eingefahrene Endstellung und zurück verschoben werden können.

In jedem Zählwerkrahmen 33 ist ein kammartiges Flaschenzählwerk angeordnet, das eine sich quer zur Bewegungsrichtung des Zählwerkrahmens 33 erstreckende, im vorderen Teil des Rahmens 33 drehbar gelagerte Welle 41 aufweist. Auf dieser Welle 41 sind mehrere, nebeneinanderliegende, voneinander unabhängige, als Schwinghebel ausgebildete Tasthebel 40, 140 frei drehbar gelagert. Der untere Arm 40 jedes Tasthebels stellt den eigentlichen Flaschenfühler dar. Der obere, über die Welle 41 hinaus vorspringende Arm jedes Tasthebels trägt einen Dauermagnet 42, der sich in der in Fig. 9 mit voll ausgezogenen Linien dargestellten Ruhestellung des Tasthebels 40, 140 in der Nähe eines zugeordneten, magnetisch berührungslos betätigbaren, elektrischen Schalter 43 befindet. Die allen Tasthebeln 40, 140 zugeordneten Schalter 43 sind auf einer ortsfesten Traverse 44 des Zählwerkrahmens 33 befestigt.

An den Enden der drehbar gelagerten Welle 41 sind zwei Hebelarme 45 befestigt, die eine zur Welle 41 parallele, im Bereich der oberen Tasthebelarme 140 angeordnete Steuertraverse 46 tragen. An einem Ende der Welle 41 ist ausserdem ein Winkelhebel 47 befestigt, der mit der Kolbenstange eines hydraulischen oder pneumatischen, an einem Seitenholm des Zählwerkrahmens angelenkten Betätigungszylinders 48 verbunden ist. In der Wirkstellung des Flaschenzählwerks befindet sich die Steuertraverse 46 in der in Fig. 9 dargestellten Ruhestellung, in der die Tasthebel 40, 140 frei schwenkbar auf der Welle 41 sitzen und mit ihrem unteren Arm auf der Unterseite des betreffenden Zählwerkrahmens 33 vorspringen. Mit Hilfe des Betätigungszylinders 48 kann jedoch die Welle 41 derart verdreht werden, dass die über die Hebelarme 45 mitgeschwenkte Steuertraverse 46 die Tasthebel 40, 140 in eine in Fig. 9 strichpunktiert dargestellte Ruhestellung verschwenkt, in der die Tasthebel mit ihrem unteren Arm angehoben und ganz in den betreffenden Zählwerkrahmen 33 zurückgezogen sind.

In dem vorderen Teil jedes Zählwerkrahmens 33 ist vor dem eigentlichen, kammartigen, aus den Tasthebeln 40, 140 gebildeten Flaschenzählwerk eine weitere quergerichtete Welle 49 drehbar gelagert, die parallel zur Welle 41 verläuft und mit Hilfe von radialen Hebelarmen eine zur Welle 49 parallele Taststange 50 trägt. Diese Taststange 50 ist auf der dem Flaschenkästenstapel P zugekehrten Seite der Welle 49 angeordnet und die betreffenden radialen Hebelarme sind ausgehend von der Welle 49 schräg nach unten gegen den Flaschenkästenstapel P geneigt. Die Welle 49 wird mit Hilfe einer Zugfeder 51 und eines Anschlags 52 in der in Fig. 9 dargestellten Ruhestellung gehalten, in der die Taststange 50 etwa bündig mit der Unterseite des Zählwerkrahmens 33 liegt, oder etwas auf der Unterseite dieses Rahmens vorspringt und sich ein auf einem Hebelarm 54 der Welle 49 befestigter Dauermagnet 53 in der Nähe eines am Zählwerkrahmen 33 befestigten, magnetisch berührungslos betätigbaren Schalters 55 befindet. Wenn beim Einfahren der Zählwerkrahmen 33 über die zugeordnete, voneinander angehobenen Flaschenkästenschichten des Stapels P die Taststange 50 gegen ein Hindernis z.B. gegen eine vorspringende Flasche oder gegen einen vorspringenden Flaschenkasten der darunterliegenden Flaschenkästenschicht stösst, wird sie entgegen der Kraft der Zugfeder 51 nach hinten geschwenkt. Die entsprechend verdrehte Welle 49 entfernt infolgedessen den Dauermagnet 53 vom zugeordneten, ortsfesten Schalter 55, dessen Schaltzustand dadurch verändert wird. Die Vorschub- bzw. Einfahrbewegung der Zählwerkrahmen 33 wird dabei sofort unterbrochen.

Aus Stabilitätsgründen werden die Flaschenkästen C, C' der übereinanderliegenden Flaschenkästenschichten des Stapels P üblicherweise derart zueinander versetzt angeordnet, dass keine durchlaufende vertikale Fugen im Stapel entstehen. So z.B. können die einzelnen Flaschenkästen C, C' in den übereinanderliegenden Flaschenkästenschichten des Stapels P abwechselnd die in Fig. 10 und 11 dargestellten Anordnungen aufweisen. Trotzdem sind in jeder Flaschenkästenschicht die einzelnen Flaschenaufnahmen bzw. die Sollstellungen der einzelnen Flaschen H in etwa gleichen, d.h. übereinstimmenden, zueinander und zu der Bewegungsrichtung der Zählwerkrahmen 33 parallelen, übereinanderliegenden Reihen geordnet, wie insbesondere in Fig. 1, 10 und 11 dargestellt ist. Die auf der Welle 41 jedes Zählwerkrahmens 33 schwenkbar gelagerten Tasthebel 40, 140 sind im Bereich je einer dieser Flaschenreihen angeordnet und derart insbesondere verschieden breit ausgebildet, dass sie in ihrer frei hängenden, in Fig. 9 mit voll ausgezogenen Linien dargestellten Wirkstellung mit ihren unteren Enden in die Flaschenkästen der jeweils darunterliegenden Flaschenkästenschicht des Stapels P eintauchen und mit den darin angeordneten Flaschen H in Eingriff kommen. Die Anzahl der Tasthebel 40, 140 des Flaschenzählwerks jedes Zählwerkrahmens 33 entspricht der Anzahl der Flaschenreihen, die sich in der in Fig. 10 und 11 mit dem Pfeil F2 angedeuteten Bewegungsrichtung der Zählwerkrahmen 33 beim Einfahren zwischen die angehobenen Flaschenkästenschichten erstrecken. Zusätzlich sind noch zwei Tasthebel 40′ und 40″ bzw. 40‴ und 40⁗ vorgesehen, die auf die oberen Ränder der im Inneren des Stapels P nebeneinanderliegenden, sich in der Einfahrrichtung F2 der Zählwerkrahmen 33 erstreckenden Seitenwänden der Flaschenkästen C, C′ ansprechen. Diese Ränder sind mit CB1 und CB2 bei der Flaschenkästenanordnung nach Fig. 10 und mit CB3 bzw. CB4 bei der Flaschenkästenanordnung nach Fig. 11 bezeichnet.

An den vertikalen Verbindungsstangen 35, 35′ der Zählwerkrahmen 33 oder am obersten Zählwerkrahmen 33 ist auf jeder Seite ein Sensor 56 bzw. 56′ befestigt, dem ein ortsfestes, waagerechtes, am Maschinengestell 4 oder 30 befestigtes und sich in der Bewegungsrichtung der Zählwerkrahmen 33 erstreckendes Taktgebelineal 57 bzw. 58 zugeordnet ist. Jedes Taktgebelineal 57 bzw. 58 besteht z.B. aus einer geradlinigen Folge von vollen bzw. erhabenen Teilen 157 bzw. 158, die voneinander durch Ausnehmungen bzw. Vertiefungen oder Lücken 157′ bzw. 158′ getrennt sind. Das eine, z.B. dem Sensor 56 zugeordnete Taktgebelineal 57 entspricht in der Aufeinanderfolge seiner vollen oder erhabenen Teilen 157 bzw. seiner Ausnehmungen oder Vertiefungen 157′ der Teilung der sich quer zur Bewegungsrichtung F2 der Zählwerkrahmen 33 erstreckenden Trennwände zwischen den einzelnen Flaschenaufnahmen und der dazu parallelen Begrenzungswände der mit ihren längeren Seiten quer zur Bewegungsrichtung F2 angeordneten Flaschenkästen C. Das andere, z.B. dem Sensor 56′ zugeordnete Taktgebelineal 58 entspricht dagegen in der Aufeinanderfolge seiner vollen oder erhabenen Teilen 157 bzw. seiner Ausnehmungen oder Vertiefungen 157′ der Teilung der sich quer zur Bewegungsrichtung F2 der Zählwerkrahmen 33 erstreckenden Trennwände zwischen den einzelnen Flaschenaufnahmen und der dazu parallelen Begrenzungswände der mit ihren längeren Seiten parallel zur Bewegungsrichtung F2 der Zählwerkrahmen 33 angeordneten Flaschenkästen C′.

Die Taktgebelineale 57, 58 und die darauf ansprechenden Sensoren 56, 56′ können beliebig ausgebildet sein und können z.B. magnetisch, optisch oder auch elektrisch zusammenwirken.

Die Sensoren 56, 56′ und die magnetisch berührungslos betätigbaren Schalter 43 der Tasthebel 40, 140 jedes von einem Zählwerkrahmen 33 getragenen Flaschenzählwerks sind mit einem nicht dargestellten elektronischen Rechner verbunden, der folgende Wirkungsweise zulässt:

Während der Einlaufbewegung der Zählwerkrahmen 33 in der Pfeilrichtung F2 über die Flaschenkästenschichten aus der in Fig. 3 dargestellten ausgezogenen Ausgangsstellung in die in Fig. 4 dargestellte Endstellung wird dauernd mit Hilfe der Taststangen 50 und der Schalter 55 automatisch überprüft, ob sich alle Zählwerkrahmen 33 ungestört über die jeweils darunterliegenden Flaschenkästenschichten bewegen können. Ausserdem überprüft der elektrische Rechner automatisch, ob alle Tasthebel 40, 140 ihre frei herunterhängende Wirkstellung nach Fig. 9 einnehmen können. Kurz nachdem die Tasthebel 40, 140 die ersten, d.h. den einfahrenden Zählwerkrahmen 33 zugekehrten, äusseren Begrenzungswände der Flaschenkästen C, C′ der zugeordneten Flaschenkästenschichten überfahren haben und im Bereich der ersten Querreihe von Flaschenaufnahmen frei herunterhängend in diese eingreifen, wird der dem Zählwerk jedes Zählwerkrahmens 33 zugeordnete Stromkreis des Rechners automatisch auf die betreffende Anordnung der Flaschenkästen nach Fig. 10 oder Fig. 11 eingestellt, je nachdem ob die beiden, den Rändern CB1, CB2 bzw. CB3, CB4 der längsgerichteten, stapelinneren Begrenzungswände der Flaschenkästen C, C′ zugeordneten Tasthebel 40′, 40″ bzw. 40‴, 40⁗ auf die Lage der genannten Ränder in der Anordnung nach Fig. 10 oder nach Fig. 11 ansprechen. Bei der Einstellung auf die Anordnung der Flaschenkästen C, C′ nach Fig. 10 werden die den quergerichteten Flaschenkästen C zugeordneten, in ihrer Gesamtheit mit Z bezeichneten Tasthebel 40, 140 dem Zustimmungsbefehl des Sensors 56 unterworfen, der mit dem der Teilung der genannten, quergerichteten Flaschenkästen C entsprechenden Taktgebelineal 57 zusammenwirkt. Die anderen Tasthebel 40, 140 werden dagegen dem Zustimmungsbefehl des anderen Sensors 56′ unterworfen, der mit dem der Teilung der längsgerichteten Flaschenkästen C′ entsprechenden Taktgebelineal 58 zusammenwirkt. Bei der Einstellung auf die Anordnung nach Fig. 11 werden in ähnlicher Weise die den längsgerichteten Flaschenkästen C′ zugeordneten, in ihrer Gesamtheit mit Z′ bezeichneten Tasthebel 40, 140 dem Zustimmungsbefehl des Sensors 56′ unterworfen, der mit dem der Teilung dieser Flaschenkästen entsprechenden Taktgebelineal 58 zusammenwirkt. Die übrigen Tasthebel 40, 140 werden dagegen dem Zustimmungsbefehl des anderen Sensors 56 unterworfen, der mit dem der Teilung der quergerichteten Flaschenkästen C entsprechenden Taktgebelineal 57 zusammenwirkt. Dabei spielt es keine Rolle, ob die Taktgebelineale 57, 58 auf der selben Seite oder auf der entgegengesetzten Seite der mit der zugeordneten Teilung versehenen, längs bzw. quergerichteten Flaschenkästen C′ bzw. C angeordnet sind.

Während der weiteren Einlaufbewegung der Zählwerkrahmen 33 in der Pfeilrichtung F2 stossen die Tasthebel 40, 140 mit ihren unteren Enden die in den einzelnen Aufnahmen der Flaschenkästen C, C′ liegenden Flaschen H und werden dabei verschwenkt, wie gestrichelt in Fig. 9 dargestellt ist. Dabei wird der von jedem verschwenkten Tasthebel 40, 140 getragene Dauermagnet 42 vom zugeordneten, magnetisch berührungslos betätigbaren Schalter 43 so weit entfernt, dass sich der Schaltzustand dieses Schalters 43 ändert. Diese Änderung des Schaltzustands der Schalter 43 wird in dem elektronischen Rechner zum Zählen der Flaschen H benutzt, allerdings nur dann, wenn der zugeordnete Sensor 56 oder 56' einen Zustimmungsbefehl gibt. Diese Zustimmungsbefehle der Sensoren 56 und 56' werden je nach der anfänglichen Einstellung auf eine der Flaschenkästenanordnungen nach Fig. 10 oder 11 und auf die entsprechenden Teilungen der Flaschenaufnahmen nur dann abgegeben, wenn sich die zugeordneten Tasthebel 40, 140 tatsächlich im Bereich einer Flaschenaufnahme befinden. Die Verschwenkungen der Tasthebel 40, 140 beim Überfahren der quergerichteten Trennwände zwischen den einzelnen Flaschenaufnahmen eines Flaschenkastens C, C' und beim Überfahren der quergerichteten Begrenzungswände zwischen zwei aufeinanderfolgenden Flaschenkästen C, C' sowie beim Überfahren der ersten, den einfahrenden Zählwerkrahmen 33 zugekehrten, äusseren Begrenzungswände der Flaschenkästen werden nicht mit einem Zustimmungsbefehl von den Sensoren 56, 56' begleitet und infolgedessen vom elektronischen Rechner nicht als Ansprechbewegung auf eine Flasche H gezählt.

Am Ende der Einfahrbewegung der Zählwerkrahmen 33 in der Pfeilrichtung F2 zwischen die voneinander angehobenen Flaschenkästenschichten und über die oberste Flaschenkästenschicht des Stapels P, bestimmt der elektronische Rechner die Anzahl der im Stapel P vorhandenen und/oder fehlenden Flaschen H. Diese Zahl wird angezeigt und/oder aufgezeigt und/oder aufgezeichnet und/oder gespeichert. Der elektronische Rechner kann nach der Überprüfung einer bestimmten Anzahl von Flaschenkästenstapeln P auf Anfrage auch die Gesamtanzahl der bis dahin als vorhanden und/oder fehlend gezählten Flaschen H angeben, d.h. anzeigen und/oder registrieren.

Am Ende der Einfahrbewegung der Zählwerkrahmen 33 in der Pfeilrichtung F2, nachdem die Tasthebel 40, 140 die Flaschenaufnahmen der letzten Querreihe dieser Aufnahmen überprüft haben, werden die Tasthebel 40, 140 mit Hilfe der Steuertraverse 46 in ihre in Fig. 9 strichpunktiert dargestellte Ruhestellung angehoben, in der sie mit den darunterliegenden Flaschenkästenschichten nicht in Eingriff kommen können. Die Zählwerkrahmen 33 werden dann nach Umschalten des Getriebemotors 39 aus der über die Flaschenkästenschichten des Stapels P eingefahrenen Endstellung nach Fig. 4 in die ausgefahrene Ruhestellung nach Fig. 3 zurückgeführt. Am Ende dieser Ausfahrbewegung bzw. am Anfang der nächstfolgenden Einfahrbewegung in der Pfeilrichtung F2 über die Flaschenkästenschichten eines neuen Stapels, lässt die Steuertraverse 46 die Tasthebel 40, 140 wieder frei.

**Patentansprüche**

1. Verfahren zum Zählen der in aufeinander gestapelten Flaschenkästenschichten enthaltenen oder fehlenden Flaschen, dadurch gekennzeichnet, dass die übereinanderliegenden Flaschenkästenschichten mit Ausnahme der untersten Flaschenkästenschicht voneinander angehoben werden, dass in die Lücken zwischen die Flaschenkästenschichten und über die oberste Flaschenkästenschicht gleichzeitig Flaschenzählwerke eingefahren werden, die auf die vorhandenen bzw. fehlenden Flaschen in der jeweils darunterliegenden Flaschenkästenschicht ansprechen und entsprechende Zählsignale an einen elektronischen Rechner senden, der die ermittelte Flaschenzahl für jede Flaschenkästenschicht und/oder für jeden Stapel der Flaschenkästenschichten und/oder für mehrere aufeinanderfolgende Flaschenkästenstapel anzeigt und/oder aufzeichnet und/oder für spätere Summenbildung speichert, und dann die Flaschenzählwerke ausgefahren und die angehobenen Flaschenkästenschichten abgesenkt und wieder aufeinander abgesetzt werden.

2. Verfahren nach Anspruch 1, dadurch gekennzeichnet, dass die je eine Flaschenkästenschicht bildenden Flaschenkästen zum vorübergehenden Anheben der Flaschenkästenschicht mit seitlichem Druck gegeneinander gedrückt werden.

3. Verfahren nach Anspruch 1 oder 2, dadurch gekennzeichnet, dass die in jeder Flaschenkästenschicht des Stapels enthaltenen bzw. fehlenden Flaschen für die ganze Flaschenkästenschicht gleichzeitig gezählt werden.

4. Verfahren nach Anspruch 1 oder 2, dadurch gekennzeichnet, dass die in jeder Flaschenkästenschicht enthaltenen bzw. fehlenden Flaschen reihenweise gezählt werden.

5. Vorrichtung zur Durchführung des Verfahrens nach einem der Ansprüche 1 bis 4, dadurch gekennzeichnet, dass in einer Flaschenzählstation (K2) jeder Flaschenkästenschicht des Stapels (P) mit Ausnahme der untersten Flaschenkästenschicht eine auf und ab bewegbare Greifvorrichtung (13, 13') zum seitlichen Verspannen und vorübergehenden Anheben der betreffenden Flaschenkästenschicht zugeordnet ist und mehrere, übereinanderliegende, in waagrechter Richtung vom und zum Flaschenkästenstapel (P) verschiebbar gelagerte, mit einem elektronischen Rechner zur Steuerung der Vorrichtung und zur Auswertung der Zählergebnisse verbundene Flaschenzählwerke (33) aus einer seitlich neben dem Flaschenkästenstapel (P) liegenden, ausgefahrenen Ruhestellung vorübergehend über die Flaschenkästenschichten einfahrbar sind.

6. Vorrichtung nach Anspruch 5, dadurch gekennzeichnet, dass die jeder Flaschenkästenschicht zugeordnete Greifvorrichtung aus zwei waagrechten, auf gegenüberliegenden Seiten der Flaschenkästenschicht angeordneten, gleichzeitig in waagrechter Richtung von und zu dieser Flaschenkästenschicht verschiebbaren und synchron in vertikaler Richtung heb- und senkbaren Greifbalken (13, 13') besteht.

7. Vorrichtung nach Anspruch 5 und 6, dadurch gekennzeichnet, dass die Greifbalken (13, 13') auf ihren der betreffenden Flaschenkästenschicht zugekehrten Seiten mit federnden Spannpuffern (17) versehen und mit an ihren beiden Enden gelagerten Laufrollen (12) auf vertikalen, synchron vom und zum Flaschenkästenstapel (P) verstellbaren Führungsstangen (5, 5′) verschiebbar geführt sind, wobei zwischen den übereinanderliegenden Greifbalken (13 bzw. 13′) lösbare Abstandshalter (15, 16) und Zugglieder (23) mit frei reduzierbarer, jedoch grösser als die Höhe der Flaschenkästenschichten bemessener Länge vorgesehen und sowohl die vertikalen Führungsstangen (5, 5′) einerseits als auch die obersten, waagerechten Greifbalken (13, 13′) andererseits mit je einem gemeinsamen, umkehrbaren Antrieb (10 bzw. 28) getrieblich verbunden sind.

8. Vorrichtung nach einem der Ansprüche 5 bis 7, insbesondere zur Durchführung des Verfahrens nach Anspruch 3, dadurch gekennzeichnet, dass die Flaschenzählwerke aus je einem flächenrasterartigen Flaschenzählwerk bestehen, das im Bereich jeder Flaschenaufnahme bzw. jeder Sollstellung einer Flasche in der darunterliegenden Flaschenkästenschicht einen auf das Vorhandensein oder auf das Fehlen einer Flasche ansprechenden Sensor aufweist.

9. Vorrichtung nach einem der Ansprüche 5 bis 7, insbesondere zur Durchführung des Verfahrens nach Anspruch 4, dadurch gekennzeichnet, dass die Flaschenzählwerke aus je einem Satz nebeneinanderliegender, einer Reihe von Flaschenaufnahmen bzw. Sollstellen der Flaschen (H) in der darunterliegenden Flaschenkästenschicht entsprechender Sensoren (40, 140) bestehen und in Querrichtung (F2) zu dieser Reihe über die zugeordnete Flaschenkästenschicht verführbar sind, wobei die mit einem elektronischen Rechner verbundenen, auf das Vorhandensein oder das Fehlen der Flaschen (H) ansprechenden Sensoren (40, 140) durch eine Taktgebevorrichtung (56, 56′, 57, 58) gesteuert werden, die die Zählfunktion der Sensoren beim Überfahren der Flaschenaufnahmereihen einschaltet, dagegen beim Überfahren der quergerichteten Trennwände zwischen den aufeinanderfolgenden Flaschenaufnahmereihen und der quergerichteten stapelinneren Begrenzungswände der die Flaschenkästenschicht zusammensetzenden Flaschenkästen (C, C′) ausschaltet.

10. Vorrichtung nach Anspruch 9, dadurch gekennzeichnet, dass bei Flaschenkästenschichten, die aus mehreren, rechteckigen, mit ihren Längsseiten zum Teil parallel zur Einfahrrichtung (F2) der Flaschenzählwerke und zum Teil quer zu dieser Richtung angeordneten Flaschenkästen (C′, C) zusammengesetzt sind und abwechselnd verschiedene Anordnungen der Flaschenkästen zur Vermeidung von durchgehenden Fugen aufweisen, jeder Flaschenkästenschicht zwei Taktgebevorrichtungen (56, 57 und 56′, 58) zugeordnet sind, von denen die eine (56, 57) der Teilung der Flaschenaufnahmereihen der quergerichteten Flaschenkästen (C) und die andere (56′, 58) der Teilung der Flaschenaufnahmereihen der längsgerichteten Flaschenkästen (C′) entspricht, wobei jedes Flaschenzählwerk mindestens zwei zusätzliche Sensoren (40′, 40′′ bzw. 40′′′, 40′′′′) aufweist, die auf die Lage der parallel zur Einfahrrichtung (F2) des Flaschenzählwerks verlaufenden, stapelinneren Begrenzungswände (CB1, CB2 bzw. CB3, CB4) der Flaschenkästen (C, C′) in der darunterliegenden Flaschenkästenschicht ansprechen und die auf die Flaschen (H) ansprechenden Sensoren (40, 140) zum Teil der einen und zum Teil der anderen Taktgebevorrichtung (56, 57 bzw. 56′, 58) unterordnen.

11. Vorrichtung nach Anspruch 9 oder 10, dadurch gekennzeichnet, dass die auf die Flaschen (H) ansprechenden Sensoren aus je einem Tasthebel (40, 140) bestehen, der frei schwenkbar auf einer quer zur Einfahrrichtung (F2) des Flaschenzählwerks verlaufenden Achse (41) gelagert und als Betätigungsorgan für einen elektrischen Schalter (43) ausgebildet ist.

12. Vorrichtung nach Anspruch 9 oder 10, dadurch gekennzeichnet, dass jede Taktgebervorrichtung (56, 57 bzw. 56′, 58) aus einem ortsfesten, sich in der Bewegungsrichtung des Flaschenzählwerks erstreckenden, waagerechten Taktgebelineal (57 bzw. 58) mit einem der zugeordneten Teilung der Flaschenaufnahmereihen entsprechenden Raster (157, 157′ bzw. 158, 158′) und aus einem auf dieses Taktgebelineal ansprechenden, zusammen mit dem Flaschenzählwerk (33) bewegbaren Sensor (56 bzw. 56′) besteht.

13. Vorrichtung nach einem der Ansprüche 5 bis 12, dadurch gekennzeichnet, dass die Flaschenzählwerke in waagerechten, im Abstand übereinander angeordneten, vom und zum Flaschenkästenstapel (P) verschiebbar geführten Zählwerkrahmen (33) gelagert sind, die mit einem gemeinsamen, umschaltbaren Antrieb (39) getrieblich gekuppelt sind.

## Claims

1. A method of counting the bottles which are missing from or contained in layers of boxes of bottles, which layers are stacked one upon the other, characterised in that the superposed layers of boxes of bottles are lifted away from each other, with the exception of the lowermost layer of the boxes of bottles, that bottle counting devices are simultaneously introduced into the gaps between the layers of boxes of bottles and over the uppermost layer of boxes of bottles, which bottle counting devices respond to the bottles which are missing from or present in the respective layer of boxes of bottles disposed therebelow, and which send corresponding counting signals to an electronic computer which displays and/or records and/or stores for subsequent totalling, the determined number of bottles for each layer of boxes of bottles and/or for each stack of the layers of boxes of bottles and/or for a plurality of successive stacks, and the bottle counting devices are then removed and the raised layers of boxes are lowered and set down on to each other again.

2. A method according to claim 1 characterised in that the boxes of bottles forming a respective layer thereof are pressed against each other with a sideways pressure, for the operation of temporarily raising the layer of boxes of bottles.

3. A method according to claim 1 or claim 2 characterised in that the bottles which are missing from or contained in each layer of boxes of bottles in the stack is counted simultaneously, for the entire layer of boxes.

4. A method according to claim 1 or claim 2 characterised in that the bottles contained in or missing from each layer of boxes of bottles are counted in rows.

5. Apparatus for carrying out the method according to one of claims 1 to 4 characterised in that in each bottle counting station (K2), associated with each layer of boxes of bottles in the stack (P), with the exception of the lowermost layer, is a gripping means (13, 13') which is movable up and down, for laterally clamping and temporarily lifting the respective layer, and a plurality of superposed bottle counting devices (33) which are mounted movably in a horizontal direction away from and towards the stack (P) of boxes of bottles and which are connected to an electronic computer for controlling the apparatus and for evaluating the counter results can be temporarily moved into a position above the layers of boxes of bottles, from a retracted rest position disposed laterally beside the stack (P).

6. Apparatus according to claim 5 characterised in that the gripping means associated with each layer of boxes of bottles comprises two horizontal gripping beam members (13, 13') which are arranged on opposite sides of the layer of boxes of bottles and which are simultaneously displaceable in a horizontal direction from and towards said layer and which can be synchronously raised and lowered in a vertical direction.

7. Apparatus according to claim 5 and claim 6 characterised in that the gripping beam members (13, 13') are provided with resilient clamping buffers (17) on their sides which are towards the respective layer of boxes of bottles, and are guided displaceably by means of rollers (12) mounted on their two ends, on vertical guide bars (5, 5') which are adjustable synchronously towards and away from the stack (P), wherein disposed between the superposed gripping beam members (13 and 13' respectively) are releasable spacer members (15, 16) and tie members (23) which are of a freely reducible length which however is greater than the height of the layers of boxes of bottles, and both the vertical guide bars (5, 5') on the one hand and also the uppermost horizontal gripping beam members (13, 13') on the other hand are drivingly connected to a respective common reversible drive (10 and 28 respectively).

8. Apparatus according to one of claims 5 to 7, in particular for carrying out the method according to claim 3, characterised in that the bottle counting devices each comprise a flat grid-like bottle counting device which, in the region of each bottle receiving means or each desired position of a bottle in the layer of boxes of bottles disposed therebelow, has a sensor responsive to the presence or the absence of a bottle.

9. Apparatus according to one of claims 5 to 7, in particular for carrying out the method according to claim 4, characterised in that the bottle counting devices each comprise a set of juxtaposed sensors (40, 140) corresponding to a row of bottle receiving means or desired positions of the bottles (H) in the subjacent layer of boxes of bottles, and are movable in the transverse direction (F2) with respect to said row over the associated layer of boxes of bottles, wherein the sensors (40, 140) which are connected to an electronic computer and which are responsive to the presence or the absence of the bottles (H) are controlled by a timing means (56, 56', 57, 58) which switches on the counting function of the sensors on passing over the rows of bottle receiving means, whereas it switches the counting function off on passing over the transversely directed partitioning walls between the successive rows of bottle receiving means and the transversely directed boundary walls, which are internal of the stack, of the boxes of bottles (C, C'), which make up the layer of boxes.

10. Apparatus accordint to claim 9 characterised in that, in the case of layers of boxes of bottles which are made up of a plurality of rectangular boxes (C', C), with some of their longitudinal sides parallel to the direction of introduction (F2) of the bottle counting devices and some of their longitudinal sides transverse with respect to said direction, and which alternately have different arrangements in respect of the boxes of bottles, to avoid through gaps, two timing means (56, 57 and 56', 58) are associated with each layer of boxes of bottles, of which one timing means (56, 57) corresponds to the pitch of the rows of bottle receiving means of the transversely directed boxes (C) and the other timing means (56', 58) corresponds to the pitch of the rows of bottle receiving means of the longitudinally directed boxes (C'), wherein each bottle counting device has at least two additional sensors (40', 40'' or 40''', 40'''') which are responsive to the position of the boundary walls (CB1, CB2 and CB3, DB4) of the boxes (C C') in the subjacent layer of boxes, said boundary walls being disposed inwardly of the stack and extending parallel to the direction of introduction (F2) of the bottle counting device, and the sensors (40, 140) which are responsive to the bottles (H) are in part subordinated to the one timing means and in part to the other timing means (56, 57 and 56', 58).

11. Apparatus according to claim 9 or claim 10 characterised in that the sensors responsive to the bottles (H) each comprise a respective sensing lever (40, 140) which is freely pivotally mounted on an axis (41) extending transversely with respect to the direction of introduction (F2) of the bottle counting device, and is in the form of an actuating member of en electrical switch (43).

12. Apparatus according to claim 9 or claim 10 characterised in that each timing means (56, 57 or 56', 58) comprises a stationary horizontal timing straightedge member (57 or 58) which extends in the direction of movement of the bottle counting device, with a scanning pattern (157, 157' and 158, 158') corresponding to the associated pitch of the rows of bottle receiving means, and a sensor (56 and 56') which is responsive to said timing straightedge member and which is movable together with the bottle counting device (33).

13. Apparatus according to one of claims 5 to 12 characterised in that the bottle counting devices are mounted in horizontal counting device frames (33) which are arranged at a spacing one above the other and which are guided displaceably away from and towards the stack (P) of boxes of bottles, and which are drivingly coupled to a common reversible drive (39).

**Revendications**

1. Méthode pour compter des bouteilles présentes ou absentes dans des couches empilées de caisses à bouteilles, caractérisée en ce que l'on soulève les unes des autres les couches superposées de caisses à bouteilles à l'exception de la couche de caisses à bouteilles située tout en bas, en ce que dans les lacunes entre les couches de caisses à bouteilles et au-dessus de la couche de caisses à bouteilles située tout en haut, on introduit simultanément des compteurs de bouteilles, qui réagissent aux bouteilles présentes ou absentes dans la couche de caisses à bouteilles chaque fois située en dessous et envoient des signaux de comptage correspondants à un calculateur électronique, qui indique le nombre de bouteilles déterminé pour chaque couche de caisses à bouteilles et/ou pour chaque pile de couches de caisses à bouteilles et/ou pour plusieurs piles successives de caisses à bouteilles et/ou enregistre ce nombre et/ou le mémorise pour former par la suite la somme, et en ce qu'alors on fait sortir les compteurs de bouteilles et on abaisse les couches de caisses à bouteilles soulevées et on les pose à nouveau l'une sur l'autre.

2. Méthode selon la revendication 1, caractérisée en ce que, pour le soulèvement momentané de la couche de caisses à bouteilles, on pousse les unes contre les autres par une pression latérale les caisses à bouteilles formant chaque fois une couche de caisses à bouteilles.

3. Méthode selon l'une des revendications 1 ou 2, caractérisée en ce que l'on compte simultanément, pour toute la couche de caisses à bouteilles, les bouteilles présentes ou absentes dans chaque couche de caisses à bouteilles.

4. Méthode selon l'une des revendications 1 et 2, caractérisée en ce que l'on compte par rangées les bouteilles présentes ou absentes dans chaque couche de caisses à bouteilles.

5. Dispositif pour la mise en œuvre de la méthode selon l'une des revendications 1 à 4, caractérisé en ce qu'en un poste de comptage de bouteilles (K2), à chaque couche de caisses à bouteilles de la pile (P), à l'exception de la couche de caisses à bouteilles située tout en bas, est adjoint un dispositif preneur (13, 13') pouvant se mouvoir vers le haut et vers le bas, pour le serrage latéral et le soulèvement temporaire de la couche de caisses à bouteilles, dont il s'agit, et en ce que plusieurs compteurs de bouteilles (33) superposés, montés de manière à pouvoir coulisser en direction horizontale en s'éloignant et en se rapprochant de la pile de caisses à bouteilles, reliés à un calculateur électronique pour commander l'appareil et pour interpréter les résultats de comptage, peuvent, en partant d'une position de repos écartée, située latéralement à côté de la pile de caisses à bouteilles (P), s'introduire au-dessus des couches de caisses à bouteilles.

6. Dispositif selon la revendication 5, caractérisé en ce que le dispositif preneur adjoint à chaque couche de caisses à bouteilles se compose de deux barres preneuses horizontales (13, 13'), disposées sur des côtés opposés de la couche de caisses à bouteilles, pouvant coulisser simultanément en direction horizontale pour s'éloigner et se rapprocher de cette couche de caisses de bouteilles et pouvant se lever et s'abaisser en direction verticale de façon synchrone.

7. Dispositif selon les revendications 5 et 6, caractérisé en ce que les barres preneuses (13, 13') sont munies de tampons de serrage élastiques (17) sur leurs côtés tournés vers la couche de caisses à bouteilles considérées, et sont guidées par des galets (12) montés à leurs deux extrémités sur des tiges de guidage (5, 5') pouvant être réglées de façon synchrone pour s'éloigner et se rapprocher de la pile de caisses à bouteilles (P), des éléments d'espacement libérables (15, 16) et des organes de traction (23) de longueur librement réductible mais supérieure à la hauteur des couches de caisses à bouteilles étant prévus entre les barres preneuses superposées (13, 13'), et aussi bien les tiges de guidage verticales (5, 5') d'une part, que les barres preneuses horizontales supérieures (13, 13'), d'autre part, étant reliées chacune mécaniquement à un entraînement réversible commun (10, 28).

8. Dispositif selon les revendications 5 à 7, en particulier pour la mise en œuvre de la méthode selon la revendication 3, caractérisé en ce que les compteurs de bouteille sont formés chacun d'un compteur de bouteilles en forme de réseau plan, qui, dans la région de chaque logement de bouteille ou de chaque position de consigne d'une bouteille dans la couche de caisses à bouteilles située en dessous, présente un capteur réagissant à la présence ou à l'absence d'une bouteille.

9. Dispositif selon les revendications 5 à 7, en particulier pour la mise en œuvre de la méthode selon la revendication 4, caractérisé en ce que les compteurs de bouteille sont formés chacun d'un jeu de capteurs (40, 140) placés côte à côte, correspondant à une rangée de logements de bouteille ou de positions de consigne des bouteilles (H) dans la couche de caisses à bouteilles située en dessous et peuvent se déplacer en direction transversale (F2) à cette rangée, au-dessus de la couche de caisses à bouteilles correspondantes, les capteurs (40, 140) reliés à un calculateur électronique et réagissant à la présence ou à l'absence des bouteilles (H) étant commandés par un rythmeur (56, 56', 57, 58), qui établit la fonction de comptage des capteurs lors du dépassement des rangées de logements de bouteilles, tandis que lors du dépassement des cloisons dirigées transversalement entre les rangées successives de logements de bouteilles et des parois intérieures à la pile, dirigées transversalement, des caisses à bouteilles (C, C') composant la couche de caisses à bouteilles, il met hors d'action cette fonction.

10. Dispositif selon la revendication 9, caractérisé en ce que, dans le cas de couches de caisses à bouteilles, qui sont composées de plusieurs caisses à bouteilles rectangulaires, dont les grands côtés sont en partie disposés parallèlement à la direction d'introduction (F2) des compteurs de bouteille et en partie transversalement à cette direction, et qui présentent alternativement des dispositions différentes des caisses à bouteilles pour éviter les joints continus, à chaque couche de caisses à bouteilles sont adjoints deux rythmeurs (56, 57 et 56', 58) dont l'un (56, 57) correspond au pas des rangées de logements de bouteille des caisses à bouteilles dirigées transversalement (C) et l'autre (56', 58) au pas des rangées de logements de bouteille des caisses à bouteilles dirigées transversalement (C'), chaque compteur de bouteilles présentant au moins deux capteurs supplémentaires (40', 40'', 40''', 40''''), qui réagissent à la position des parois de limitation (CB1, CB2, CB3, CB4), intérieures à la pile, des caisses à bouteilles (C, C') de la couche de caisses à bouteilles située en dessous, parois dirigées parallèlement à la direction d'introduction (F2) du compteur de bouteilles, et qui subordonnent les capteurs (40, 140) réagissant aux bouteilles (H), en partie à l'un et en partie à l'autre des rythmeurs (56, 57, 56', 58).

11. Dispositif selon l'une des revendications 9 ou 10, caractérisé en ce que les capteurs réagissant aux bouteilles (H) sont formés chacun d'un levier palpeur (40, 140), qui est monté de manière à pouvoir pivoter librement sur un axe (41) dirigé transversalement à la direction d'introduction (F2) du compteur de bouteille et constitue un organe d'actionnement d'un interrupteur électrique (43).

12. Dispositif selon l'une des revendications 9 ou 10, caractérisé en ce que chaque rythmeur (56, 57, 56', 58) est formé d'une règle horizontale de rythmeur (57, 58) à position fixe, s'étendant dans la direction de mouvement du compteur de bouteilles et présentant une trame (157, 157', 158, 158') correspondant à la division correspondante des rangées de logements de bouteille et d'un capteur (56, 56') réagissant à cette règle de rythmeur et pouvant se mouvoir en même temps que le compteur de bouteilles (33).

13. Dispositif selon l'une des revendications 5 à 12, caractérisé en ce que les compteurs de bouteilles sont montés dans des cadres horizontaux de compteur (33) superposés avec espacement et guidés de manière à pouvoir coulisser en s'éloignant et en se rapprochant de la pile de caisses à bouteilles (P), et qui sont accouplés mécaniquement à un entraînement réversible commun (39).

0 065 752

_Fig. 1_

Fig. 2

Fig. 3

0 065 752

FIG. 4

FIG. 9

FIG. 5

_Fig_. 8

_Fig_. 7

_Fig_. 6

0 065 752

Fig. 10

Fig. 11